**Europäisches Patentamt**

(19) **European Patent Office**

**Office européen des brevets**

(11) Numéro de publication: **0 287 456**
**B1**

(12) # FASCICULE DE BREVET EUROPEEN

(45) Date de publication du fascicule du brevet:
**19.12.90**

(51) Int. Cl.⁵: **B62D 1/18, F16F 7/12**

(21) Numéro de dépôt: **88400881.4**

(22) Date de dépôt: **12.04.88**

---

(54) Volant de direction notamment de véhicule automobile.

---

(30) Priorité: **17.04.87 FR 8705539**

(43) Date de publication de la demande:
**19.10.88 Bulletin 88/42**

(45) Mention de la délivrance du brevet:
**19.12.90 Bulletin 90/51**

(84) Etats contractants désignés:
**DE ES GB IT SE**

(56) Documents cités:
**EP-A- 0 130 009**
**FR-A- 2 244 658**
**FR-A- 2 254 960**
**FR-A- 2 357 412**
**FR-A- 2 401 051**
**FR-A- 2 463 708**
**US-A- 3 167 974**
**US-A- 4 336 868**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Henigue Christian, 6, rue des Vosges, Suarge§ 90000 Delle(FR)**

(74) Mandataire: **Mestre, Jean et al, c/o CABINET LAVOIX 2, place d'Estienne d'Orves, F-75441 Paris Cédex 09(FR)**

---

ACTORUM AG

## Description

La présente invention concerne un volant de direction notamment de véhicule automobile.

Il existe un souci constant d'améliorer la sécurité des utilisateurs de véhicule automobile.

Ainsi par exemple, les véhicules automobiles sont équipés de différents moyens permettant d'absorber au maximum l'énergie cinétique du corps des utilisateurs, en cas de choc, afin d'éviter à ceux-ci de graves lésions corporelles.

Le conducteur du véhicule est particulièrement exposé à ce type de problèmes en raison de la présence du volant qui peut occasionner des dommages relativement importants.

On a donc développé, dans l'état de la technique, différents dispositifs permettant soit au volant, soit à la colonne de direction elle-même de se déformer pour amortir le choc.

Ainsi par exemple, on connaît d'après la demande de brevet européen 0 130 009, un agencement d'absorption d'énergie par exemple dans une colonne de direction de véhicule automobile, cette colonne comportant deux parties télescopiques, maintenues en position par un manchon déformable qui se déforme en cas de choc pour permettre à l'une des parties de la colonne de direction, de coulisser dans l'autre partie, en absorbant ainsi une partie de l'énergie de choc.

Par ailleurs, on connaît également d'après le document FR-2 244 658, une colonne de direction de sécurité pour véhicule automobile, comprenant un arbre de direction déformable de façon permanente sous l'action des forces appliquées lors d'une absorption d'énergie et qui est muni de moyens qui réalisent, pour une certaine charge critique, une déformation de l'arbre de direction. L'arbre de direction, au moins à un endroit, est conformé, de manière connue en soi, en une hélice dont le diamètre des spires est nettement supérieur au diamètre de la partie non déformée de l'arbre de direction.

On connaît également d'après le document FR-A 2 254 960, un volant de sécurité dont l'armature comprend, soudées de chaque côté d'un moyeu central, deux branches en acier repliées sensiblement en S au voisinage de leur extrémité soudée ay moyeu, et qui sont soudées à leur autre extrémité sur le cercle d'armature en acier du volant, lesdites branches formant entre elles un angle au sommet voisin de 30°.

le document FR-A 2 401 051 décrit un volant de sécurité qui comprend un absorbeur d'énergie tubulaire fait d'une feuille roulée alvéolaire à zone de déformation unique ou multiple.

Cependant, tous ces dispositifs présentent un certain nombre d'inconvénients, notamment au niveau de leur structure et de leur mise en oeuvre sur un véhicule automobile.

Le but de l'invention est donc de résoudre ces problèmes en proposant un volant de direction qui soit simple, fiable, dont le prix de revient soit le plus faible possible et qui permette d'absorber de manière efficace l'énergie de choc du corps du conducteur.

A cet effet, l'invention a pour objet un volant de direction notamment de véhicule automobile, du type exposé dans la préambule de la revendication principale et connu par exemple de FR-A 2 401 051 et dont les particularités sont énoncées dans la partie caractérisante de celle-ci.

Selon un mode de réalisation, l'organe tu bulaire comprend trois couches de fibres de renfort s'étendant parallèlement à l'axe de l'organe, alternées deux à deux, avec trois couches de fibres de renfort enroulées suivant la circonférence de cet organe tubulaire, lesdites couches de fibres étant noyées dans un liant et les fibres de renfort étant jointives.

L'invention sera mieux comprise à l'aide de la description qui va suivre, donnée uniquement à titre d'exemple et faite en se référant aux dessins annexés, sur lesquels :

- la Fig.1 représente une vue en coupe d'un volant selon l'invention; et
- la Fig.2 représente la répartition des fibres dans un organe tubulaire entrant dans la constitution d'un volant selon l'invention.

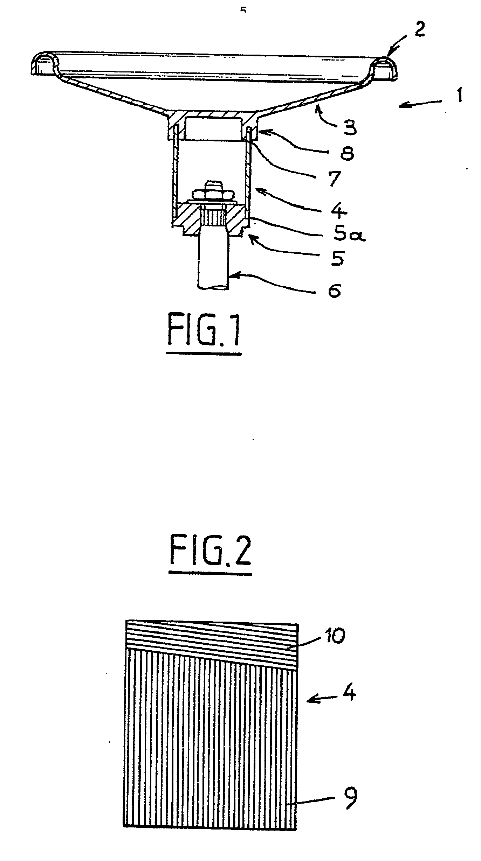

Ainsi qu'on peut le voir sur la Fig.1, un volant de direction 1 notamment de véhicule automobile, comporte de manière connue en soi une jante 2, par exemple annulaire, au moins un bras 3 de liaison, des moyens 4 d'absorption d'énergie et un moyeu 5 coopérant avec une colonne de direction 6 du véhicule automobile.

Selon l'invention, les moyens d'absorption 4 sont constitués par un organe tubulaire en matériau composite interposé entre ledit au moins un bras 3 et le moyeu 5.

L'une des extrémités de cet organe tubulaire est engagée dans une gorge 7 d'une plaque de liaison 8 sur laquelle est fixée l'extrémité correspondante du bras 3, tandis que l'autre extrémité de l'organe tubulaire est fixée sur le moyeu 5 en appui sur un épaulement 5a de centrage et de positionnement.

Ainsi qu'il est représenté sur cette figure, le volant de direction peut comporter plusieurs bras, par exemple deux, permettant de relier la jante au reste du volant.

Comme cela est illustré sur la Fig.2, l'organe tubulaire 4 comprend des couches de fibres de renfort s'étendant parallèlement à l'axe de l'organe, telles que les fibres 9, alternées deux à deux, avec des couches de fibres de renfort, telles que les fibres 10, enroulées suivant la circonférence de l'organe tubulaire. Ces couches de renfort sont noyées dans un liant et les fibres sont de préférence jointives. Avantageusement, l'organe comporte trois couches de fibres parallèles à l'axe de cet organe, alternées deux à deux, avec trois couches de fibres enroulées suivant la circonférence de ce dernier.

Les fibres de renfort peuvent par exemple être constituées par des fibres de verre et le liant par une résine époxy, l'ensemble étant soumis à un traitement thermique, par exemple à 150°C pendant une heure et demie pour durcir la résine.

Il va de soi que d'autres constituants peuvent être utilisés.

En cas de choc, l'énergie du corps du conducteur est absorbée par l'organe tubulaire 4, qui céde sous la contrainte en amortissant ainsi l'énergie de choc.

**Revendications**

1. Volant de direction, notamment de véhicule automobile, du type comportant une jante (2), au moins un bras de liaison (3), des moyens (4) d'absorption d'énergie de choc et un moyeu (5) où ces moyens d'absorption d'énergie sont constitués par un organe tubulaire (4) interposé entre ledit au moins un bras (3) et le moyeu (5), l'une des extrémités dudit organe étant fixée à l'extrémité correspondante dudit au moins un bras, tandis que l'autre extrémité de cet organe (4) est fixée sur le moyeu (5) et où l'extrémité correspondante dudit au moins un bras (13) est reliée à une plaque de liaison (8), caractérisé en ce que les moyens d'absorption d'énergie (4) sont faits en matériau composite et en ce que cette plaque de liaison (8) comporte une gorge (7) dans laquelle est engagée l'extrémité correspondante de l'organe tubulaire (4).

2. Volant suivant la revendication 1, caractérisé en ce que le moyeu (5) comporte un épaulement (5a) de centrage et de positionnement de l'extrémité correspondante de l'organe.

3. Volant selon l'une quelconque des revendications précédentes, caractérisé en ce que l'organe tubulaire (4) comprend trois couches de fibres de renfort (4) s'étendant parallèlement à l'axe de l'organe, alternées deux à deux avec trois couches de fibres de renfort (10) enroulées suivant la circonférence de l'organe tubulaire, lesdites couches de fibre étant noyées dans un liant et les fibres de renfort étant jointives.

4. Volant selon la revendication 3, caractérisé en ce que les fibres de renfort sont des fibres de verre et le liant une résine époxy.

**Patentansprüche**

1. Lenkrad, insbesondere für Kraftfahrzeug, mit einem Radkranz (2), mindestens einer Radspeiche (3), Mitteln (4) zur Aufnahme von Prallenergie und einer Nabe (5), wobei die Mittel zur Energieaufnahme aus einem rohrförmige Bauteil (4) bestehen, das zwischen der mindestens einen Speiche (3) und der Nabe (5) angeordnet ist, wobei das eine Ende dieses Bauteils am entsprechenden Ende der mindestens einen Speiche befestigt ist, während das andere Ende dieses Bauteils (4) an der Nabe (5) befestigt ist, und wobei das entsprechende Ende der mindestens einen Speiche (3) mit einer Verbindungsplatte (8) verbunden ist, **dadurch gekennzeichnet,** dass die Mittel (4) zur Aufnahme der Energie aus einem Verbundwerkstoff hergestellt sind und dass die Verbindungsplatte (8) eine Rille (7) aufweist, in welcher das entsprechende Ende des rohrförmigen Bauteils (4) aufgenommen ist.

2. Lenkrad nach Anspruch 1, dadurch gekennzeichnet, dass die Nabe (5) eine Schulter (5a) zum Zentrieren und Einstellen des entsprechenden Endes des Bauteils aufweist.

3. Lenkrad nach Anspruch 1 oder 2, **dadurch gekennzeichnet,** dass das rohrförmige Bauteil (4) drei Faserverstärkungsschichten (9) hat, die sich parallel zur Achse des Bauteils erstrekken, im Wechsel zwei zu zwei mit drei Faserverstärkungsschichten (10), die gemäss dem Umfang des rohrförmigen Bauteils eingerollt sind, wobei die Faserschichten mit einem Bindemittel getränkt sind und die Verstärkungsfasern nebeneinanderliegen.

4. Lenkrad nach Anspruch 3, **dadurch gekennzeichnet,** dass die Verstärkungsfasern Glasfasern sind und das Bindemittel ein Epoxy-Harz ist.

**Claims**

1. Steering wheel, in particular for a motor vehicle, of the type comprising a rim (2), at least one connecting arm (3), impact energy absorbing means (4), and a hub (5), wherein said energy absorbing means comprise a tubular element (4) interposed between said at least one arm (3) and said hub (5), one of the ends of said element being fixed to the corresponding end of said at least one arm, while the other end of said element (4) is fixed on said hub (5), and the corresponding end of said at least one arm (13) is connected to a connecting plate (8), characterized in that the energy absorbing means (4) are made from a composite material and in that said connecting plate has a groove (7) in which the corresponding end of said tubular element (4) is engaged.

2. Steering wheel according to claim 1, characterized in that said hub (5) includes a shoulder (5a) for centering and positioning the corresponding end of said element.

3. Steering wheel according to any one of the preceding claims, characterized in that said tubular element (4) comprises three layers of reinforcing fibres (4) extending in a direction parallel to the axis of said element and alternating in pairs with three layers of reinforcing fibres (10) wound along the circumference of said tubular element, said layers of fibres being embedded in a binder and said reinforcing fibres being contiguous.

4. Steering wheel according to claim 3, characterized in that the reinforcing fibres are glass fibres and the binder is an epoxy resin.

# FIG.1

# FIG.2